# EUROPEAN PATENT APPLICATION

(11) **EP 2 315 126 A1**
(43) Date of publication of application: **27.04.2011**
(21) Application number: 08792380.1
(22) Date of filing: 11.08.2008
(51) Int. Cl.: G06F 12/00

(54) **GARBAGE COLLECTION PROGRAM, GARBAGE COLLECTION METHOD, AND GARBAGE COLLECTION SYSTEM**

(71) Applicant: Fujitsu Limited, Kawasaki-shi, Kanagawa 211-8588 (JP)
(72) Inventor: FUKUSHIMA, Hirotaka, Kawasaki-shi Kanagawa 211-8588 (JP)
(74) Representative: Fenlon, Christine Lesley
(86) International application number: PCT/JP2008/064397
(87) International publication number: WO 2010/018613

(57) **Abstract**

A garbage collection program allows a computer to execute: copying valid data from a first block in a NAND type flash memory to a main memory, a unit of deletion of data stored in the NAND type flash memory being a block, the valid data and invalid data being stored in the first block; instructing an exclusive mechanism to perform exclusive control of accessing to the valid data in a copy-source; switching an access path to the valid data in the copy-source, to the valid data in a copy-destination; instructing the exclusive mechanism to release the exclusive control; copying the valid data in the copy-destination from main memory to a second block in the NAND type flash memory; instructing the exclusive mechanism to perform exclusive control of accessing to the valid data in a copy-source copied to the second block; switching an access path to the valid data in the copy-source copied to the second block, to the valid data in a copy-destination copied to the second block; and instructing the exclusive mechanism to release the exclusive control.

## Description

### Technical Field

The present invention relates to a garbage collection program, a garbage collection method, and a garbage collection system that perform, in a built-in system having an auxiliary storage medium from which data is deleted in units of a block, garbage collection processing when data in the auxiliary storage medium is deleted.

### Background Art

As represented by recent mobile phones and car navigation systems, electronic apparatuses have become compact, multifunctional, and of high performance. A lot of this depends on development of a technology of a built-in system mounted in the electronic apparatuses.

It is important in the built-in system to construct hardware with an inexpensive CPU and a main memory with minimum data storage capacity in order to reduce cost and size. As an auxiliary storage device employed in the built-in system, a NAND type flash memory (hereinafter, referred to merely as "flash memory") is often adopted. The flash memory achieves a smaller size and higher speed access than a magnetic disk device and has a certain amount of storage capacity.

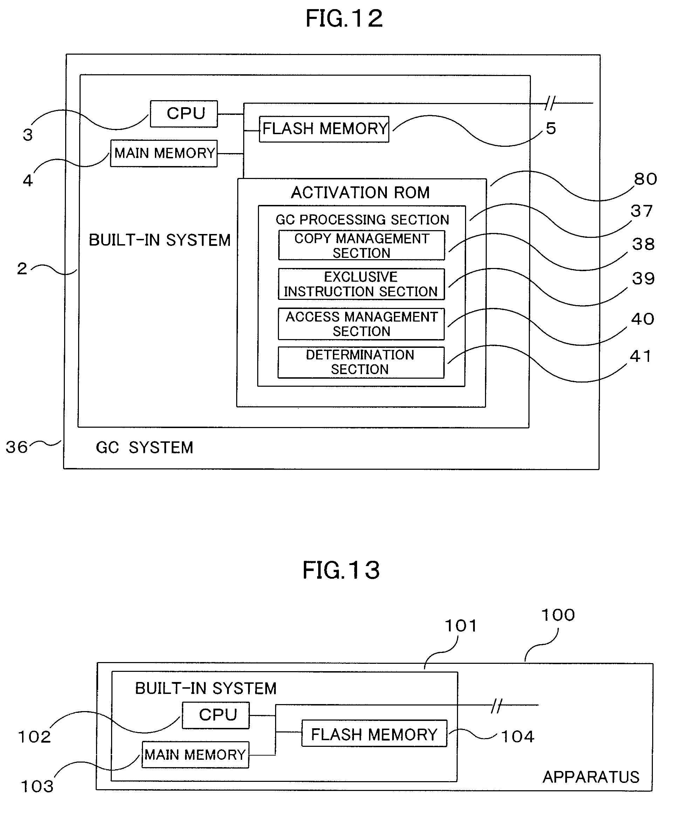

FIG. 13 is a block diagram illustrating a conventional example of a configuration of an apparatus having a built-in system using the flash memory. As an example of the apparatus having a built-in system, the abovementioned mobile phone and car navigation system can be taken. As illustrated in FIG. 13, an apparatus 100 includes, as a built-in system 101, a CPU 102 (Central Processing Unit) that controls operation of all devices in the apparatus, a main memory 103 with which the CPU 102 directly exchanges data, and a flash memory 104 serving as an auxiliary storage medium for storing data.

Once data is written in the flash memory 104, partial deletion with respect to the data-written area cannot be performed, but only deletion of the entire block containing the data-written area can be made. The number of deletion times is limited to hundred thousand and thus frequent data rewriting cannot be made. As a technology considering such characteristics, there is known an append-only file system that aims to reduce the number of writing times. Hereinafter, the append-only file system is referred to merely as "file system". The content of a file stored in the file system exists in the flash memory, while the main memory stores only management information indicating, e.g., the location of data constituting the file in the flash memory. With this configuration, the use amount of the main memory is saved. Hereinafter, the concept of the file system and file readout/rewriting operation will be described.

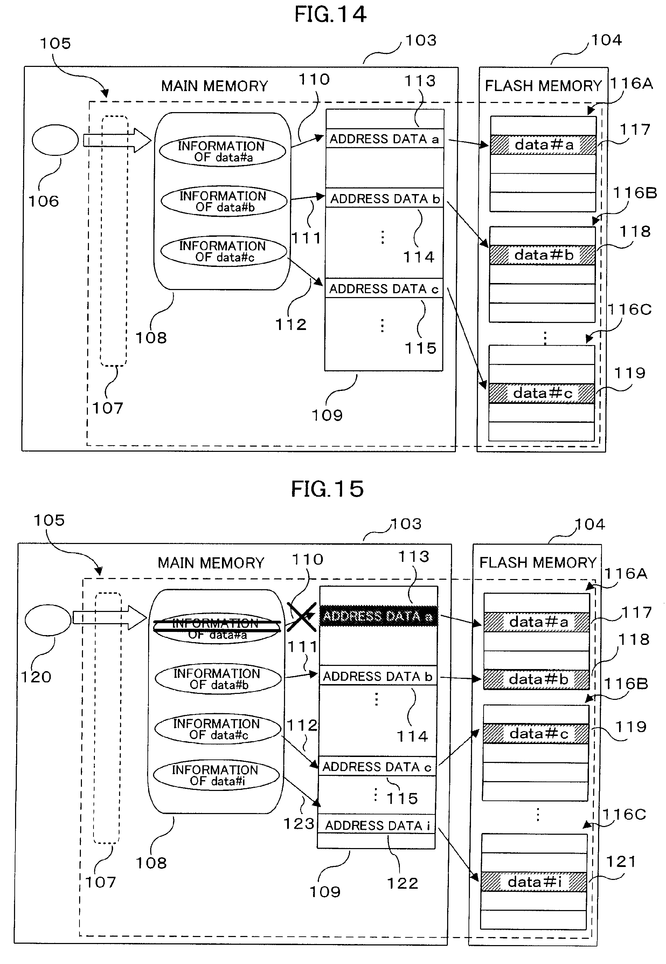

FIG. 14 is a conceptual view of data readout processing in the append-only file system. In the following drawings, the same reference numerals denote the same or corresponding parts, and redundant descriptions are omitted. As illustrated in FIG. 14, a file system 105 is assumed to access the maim memory 13 and flash memory 104. Further, an exclusive mechanism 107 which is a program for performing exclusive control has been loaded in the main memory 103. Further, the main memory 103 retains a file 108 storing configuration data (details of which will be described later) and an address table 109 storing position information indicating the location in the flash memory 104 at which data constituting the file 108 is stored. The address table 109 retains address data 113 (address data a) indicating an address at which data#a which is one of data constituting the file 108 is retained. Hereinafter, the data indicating an address is referred to as "address data". The address table 109 is assumed to retain address data 114 (address data b) which is address data of data#b and address data 115 (address data c) which is address data of data#c.

The file 108 retains, as configuration data, access paths 110 to 112 which are reference paths to the address table 109. In FIG. 14, the access path 110 is the reference path of the data#a to the address data 113, access path 111 is the reference path of the data#b to the address data 114, and access path 112 is the reference path of the data#c to the address data 115.

The flash memory 104 is composed of blocks 116A, 116B,··· , 116N, which are deletion units. Hereinafter, the blocks 116A, 116B,···, 116N are sometimes referred to collectively as "block 116". The number of blocks 116 (A, B, C, ···, N) differs depending on the storage capacity of the flash memory 104. In FIG. 14, it is assumed that the block 116A store data#a 117, block 116B store data#b 118, block 116C store data#c 119. The program 106 requests a reading/writing access with respect to a file. In this example, the program 106 performs an access for reading out the file 108. The file 108 is composed of data#a 117, data#b 118, and data#c 119.

File data readout operation in a file system using a conventional flash memory will next be described. All program operations described below are executed by the CPU 102.

The file system 105 is instructed by the program 106 to read out the file 108 and then issues an exclusive control instruction to the exclusive mechanism 107 to put an exclusive lock on the file 108, thereby preventing other processes from interfering with the file 108 (exclusive processing). Then, the file system 105 identifies necessary data from the configuration data stored in the file 108. It is assumed in this example that the data#a 117 is the necessary data. Subsequently, the file system 105 acquires the address data 113 corresponding to the data#a 117 through the access path 110 and outputs the data#a 117 from the flash memory 104 to the program 106.

After outputting data of the file 108 requested by the program 106, the file system 105 issues an exclusive control release instruction to the exclusive mechanism 107 to release the exclusive lock on the file 108, whereby data readout is completed.

With the operation described above, file data readout by the file system using the flash memory is achieved.

Next, file data rewriting processing in the file system 105 will be described.

FIG. 15 is a conceptual view of data rewriting processing in the append-only file system. In this example, data the content of which is to be altered is data#a 117, and data obtained by altering the data#a 117 is data#i 121. A program 120 is a program for altering the data#a 117 to data#i 121.

The file system 105 is instructed by the program 120 to rewrite the file 108 and then puts an exclusive lock by the exclusive mechanism 107 on the file 108 for exclusive processing. Then, according to the instruction of the program 120, the file system 105 alters the content of the data data#a 117 and writes the data#i 121 which is the content after alteration to a free space of the flash memory 104. After writing the data#i 121, the file system 105 adds address data 122 (address data i) which is the position information of the data#i 121 to the address table 109. After adding the position information, the file system 105 adds an access path 123 from the file 108 to address data 122 and deletes an access path 110 from the file 108 since the data#a 117 which is data before alteration is no longer necessary. The file system 105 marks a status flag in the address data 113 so as to represent that the data#a 117 is unnecessary. After the status flag is marked, the data#a 117 cannot be accessed, and reading/writing operation with respect to the data#a 117 is made impossible. That is, the data#a 117 becomes invalid data. After marking the status flag, the file system 105 instructs the exclusive mechanism 107 to release the exclusive lock on the file 108, whereby data content alteration is completed.

With the operation described above, file data content alteration in the file system using the flash memory is achieved.

However, when the abovementioned file data content alteration is repeated, unnecessary data (invalid data, hereinafter the unnecessary data and invalid data are used in the same meaning) is accumulated on the flash memory, resulting in waste of the capacity of the flash memory. To cope with this, a garbage collection (hereinafter abbreviated as "GC") program that collects unnecessary data on the flash memory for deletion is required. In the flash memory, deletion can be made only in units of a block and, thus, it is necessary to fill the entire block with unnecessary data for deletion. The GC program moves (copies) valid data scattered in a target block to another block so as to allow deletion of the target block. The GC program is generally stored in a ROM and is expanded after start-up of an apparatus. Hereinafter, processing with respect to the file system performed by the GC program will be described.

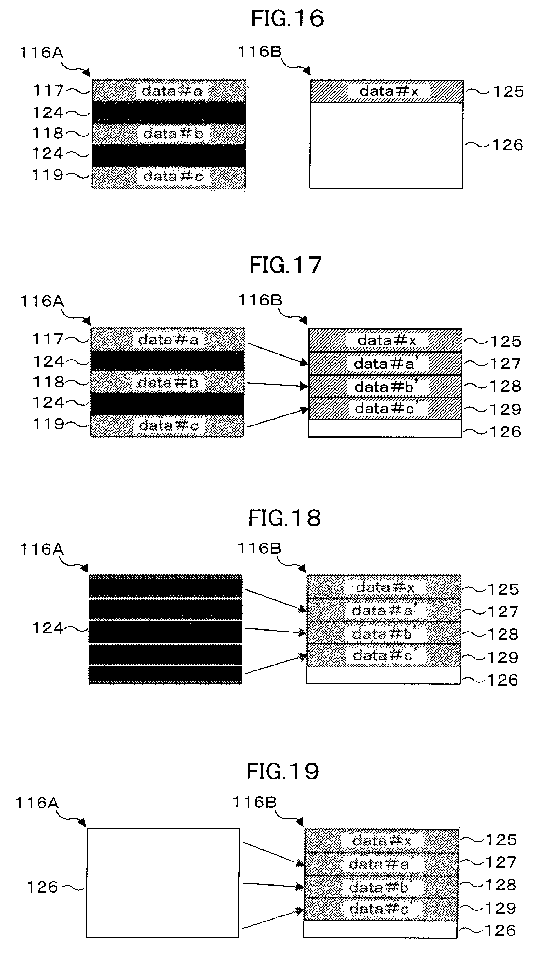

FIGS. 16 to 19 are views illustrating the concept of operation of the GC program. In the example of FIGS. 16 to 19, it is assumed that a target block of the GC program be a block 116A and that the block 116A include data#a 117, data#b 118, and data#c 119 as necessary data and unnecessary data 124. Further, it is assumed that a block 116B include data#x 125 as necessary data and a free space 126.

In the initial state illustrated in FIG. 16, the GC program creates, as illustrated in FIG. 17, replicated data (data#a' 127, data#b' 128, and data#c' 129) of the data#a 117, data#b 118, and data#c 119 as necessary data in the block 116B including the free space. After creating the replicated data, the GC program determines that the block 116A includes only the unnecessary data 124 as illustrated in FIG. 18. Then, the GC program deletes the unnecessary data 124 in the block 116A, whereby the entire block 116A can be used as a free space as illustrated in FIG. 19.

Through the above processing, the GC program performs data arrangement in the flash memory. Next, the concept of the file system in the abovementioned data arrangement processing by the GC program will be described. The data arrangement processing mentioned here refers to processing of migrating the data#a 117 on the block 116A to another block.

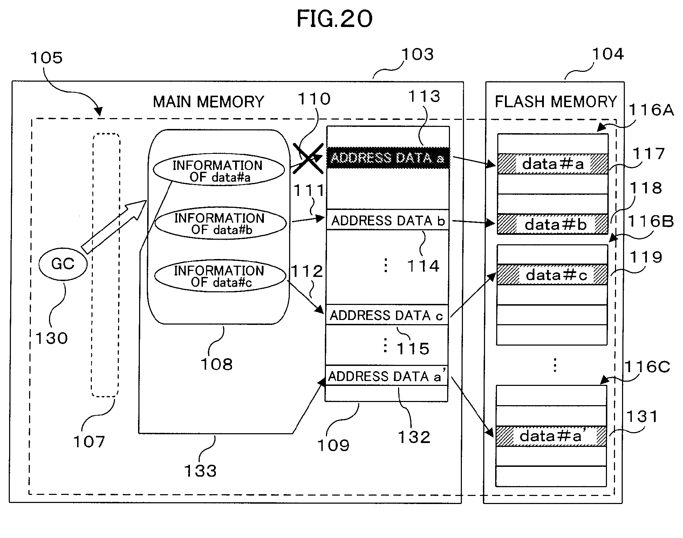

FIG. 20 is a conceptual view of operation of the GC program in the append-only file system. The data#a' 131 is a copy of the data#a 117. It is assumed that the GC program be included in the file system 105 and play some functions of the file system 105.

The GC program 130 instructs the exclusive mechanism 107 in the file system 105 to put an exclusive lock on the file 108 for exclusive processing. Then, the GC program 130 reads out the data#a 117, copies it to the free space of the flash memory 104 as the data#a' 131, and adds address data 132 (address data a') which is the position information of the data#a' 131 to an address table 109. After adding the position information, the GC program 130 adds an access path 133 from the file 108 to the address data 132 and deletes an access path 110 from the file 108 since the data#a 117 which is data before alteration is no longer necessary. After deleting the access path 110, the GC program 130 marks a status flag in the address data 113 so as to represent that the data#a 117 is unnecessary and instructs the exclusive mechanism 107 to release the exclusive lock on the file 108, whereby data arrangement is completed.

As a conventional art relating to the present invention, there is known a technique that performs garbage collection essential for using a non-volatile solid-state memory (flash memory) in a predetermined mode in parallel with data writing processing to another non-volatile solid-state memory or another recording medium and in parallel with data migration to a host device (refer to, e.g., patent Document 1 ).
[Patent Document 1] Japanese Laid-open Patent Publication No. 2007-193883

### Disclosure of the Invention

### Problems to be Solved by the Invention

Processing of the above GC program is merely migrating data in the flash memory from one area to another, so that it is desirable for the processing of the GC program not to interfere with another process. However, when another program accesses a file on which the exclusive lock is put by the GC program, another process initiated by the another program is forced to wait, resulting in delay of processing.

The present invention has been made to solve the above problem, and an object thereof is to provide a garbage collection program, a garbage collection method, and a garbage collection system capable of reducing exclusive time required for data migration.

### Means for Solving the Problems

According to an aspect of the invention, a garbage collection program allows a computer to execute: a first copy step that copies valid data from a first block in a first storage device to a second storage device different from the first storage device, a unit of deletion of data stored in the first storage device being a block, the valid data and invalid data being stored in the first block; a first exclusive instruction step that instructs an exclusive mechanism to perform exclusive control of accessing to the valid data in a copy-source of the first copy step; a first switch step that switches, after the exclusive control instructed by the first exclusive instruction step, an access path to the valid data in the copy-source of the first copy step, to the valid data in a copy-destination of the first copy step; a first exclusive release instruction step that instructs, after the first switch step switches the access path, the exclusive mechanism to release the exclusive control; a second copy step that copies the valid data in the copy-destination of the first copy step from the second storage device to a second block in the first storage device to collect, the second block being different from the first block; a second exclusive instruction step that instructs the exclusive mechanism to perform exclusive control of accessing to the valid data in a copy-source of the second copy step; a second switch step that switches, after the exclusive control instructed by the second exclusive instruction step, an access path to the valid data in the copy-source of the second copy step, to the valid data in a copy-destination of the second copy step; and a second exclusive release instruction step that instructs, after the second switch step switches the access path, the exclusive mechanism to release the exclusive control.

According to an aspect of the invention, a garbage collection method includes: a first copy step that copies valid data from a first block in a first storage device to a second storage device different from the first storage device, a unit of deletion of data stored in the first storage device being a block, the valid data and invalid data being stored in the first block; a first exclusive instruction step that instructs an exclusive mechanism to perform exclusive control of accessing to the valid data in a copy-source of the first copy step; a first switch step that switches, after the exclusive control instructed by the first exclusive instruction step, an access path to the valid data in the copy-source of the first copy step, to the valid data in a copy-destination of the first copy step; a first exclusive release instruction step that instructs, after the first switch step switches the access path, the exclusive mechanism to release the exclusive control; a second copy step that copies the valid data in the copy-destination of the first copy step from the second storage device to a second block in the first storage device to collect, the second block being different from the first block; a second exclusive instruction step that instructs the exclusive mechanism to perform exclusive control of accessing to the valid data in a copy-source of the second copy step; a second switch step that switches, after the exclusive control instructed by the second exclusive instruction step, an access path to the valid data in the copy-source of the second copy step, to the valid data in a copy-destination of the second copy step; and a second exclusive release instruction step that instructs, after the second switch step switches the access path, the exclusive mechanism to release the exclusive control.

According to an aspect of the invention, a garbage collection system includes: a first copy section that copies valid data from a first block in a first storage device to a second storage device different from the first storage device, a unit of deletion of data stored in the first storage device being a block, the valid data and invalid data being stored in the first block; a first exclusive instruction section that instructs an exclusive mechanism to perform exclusive control of accessing to the valid data in a copy-source of the first copy section; a first switch section that switches, after the exclusive control instructed by the first exclusive instruction section, an access path to the valid data in the copy-source of the first copy section, to the valid data in a copy-destination of the first copy section; a first exclusive release instruction section that instructs, after the first switch section switches the access path, the exclusive mechanism to release the exclusive control; a second copy section that copies the valid data in the copy-destination of the first copy section from the second storage device to a second block in the first storage device to collect, the second block being different from the first block; a second exclusive instruction section that instructs the exclusive mechanism to perform exclusive control of accessing to the valid data in a copy-source of the second copy section; a second switch section that switches, after the exclusive control instructed by the second exclusive instruction section, an access path to the valid data in the copy-source of the second copy section, to the valid data in a copy-destination of the second copy section; and a second exclusive release instruction section that instructs, after the second switch section switches the access path, the exclusive mechanism to release the exclusive control.

### Brief Description of the Drawings

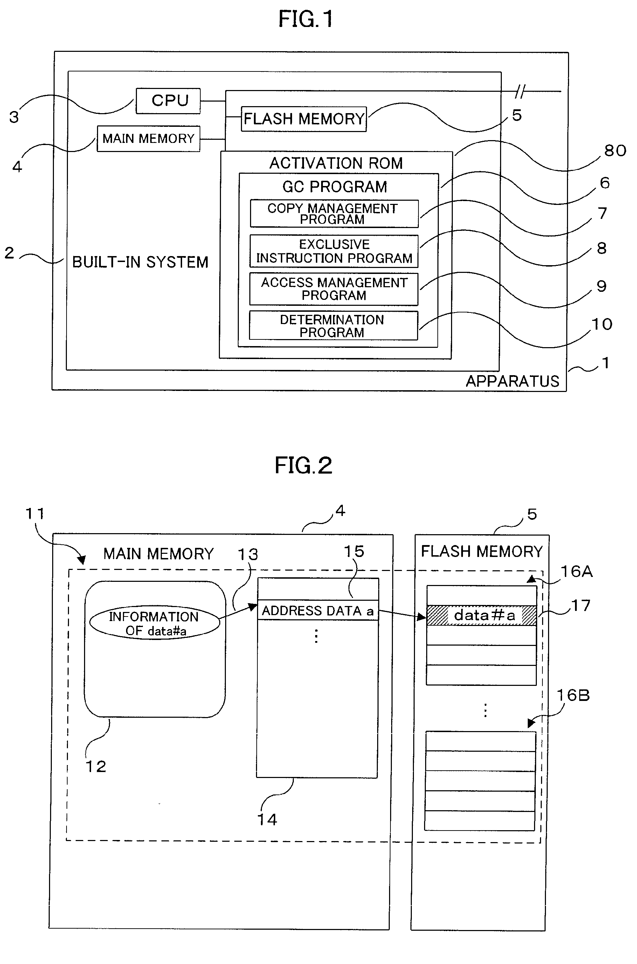

FIG. 1 is a block diagram illustrating an example of a configuration of an apparatus provided with a GC program in an embodiment of the present invention.
FIG. 2 is a conceptual view of an append-only file system according to the present embodiment.

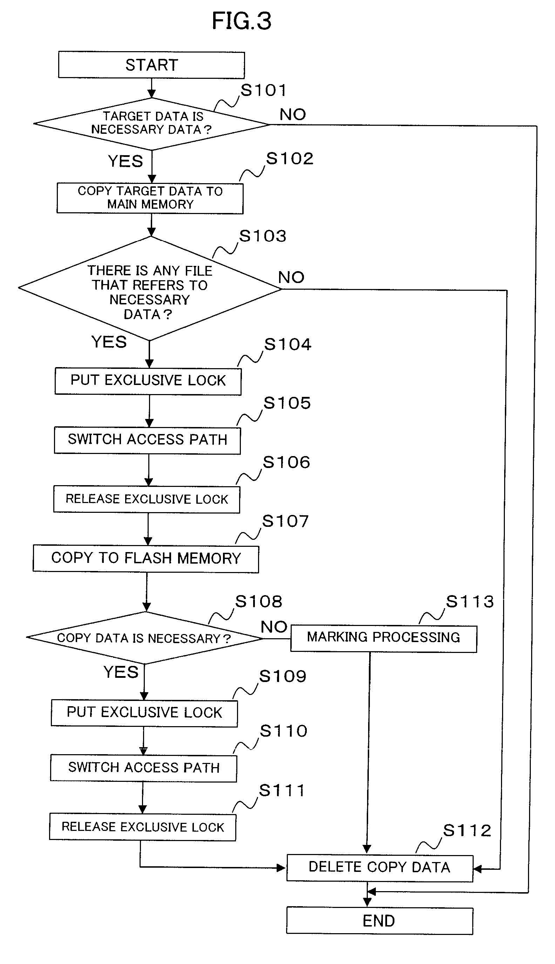

FIG. 3 is a flowchart illustrating an example of operation of the GC program according to the present embodiment.

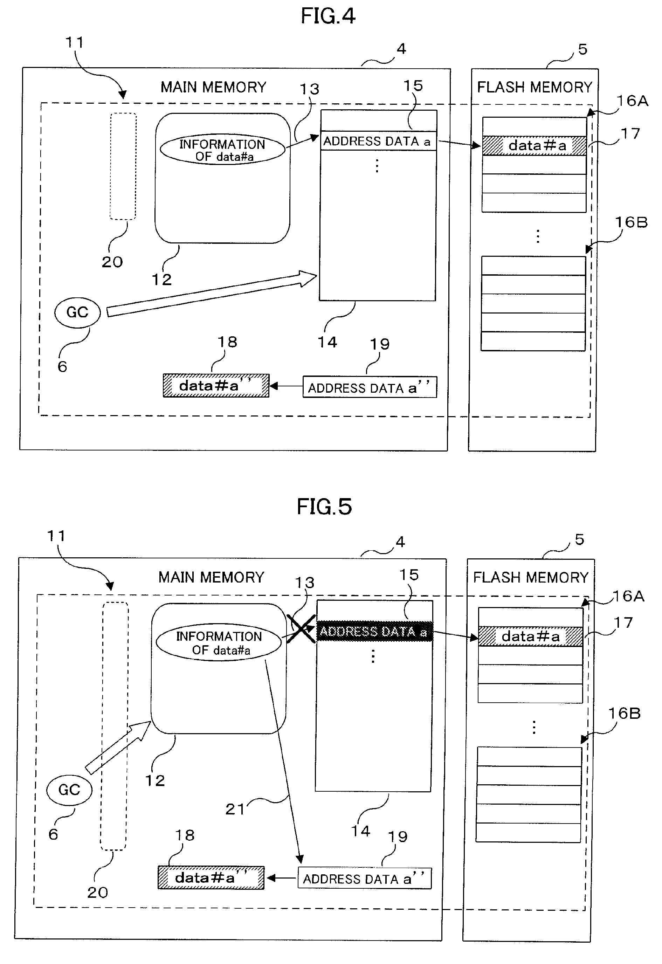

FIG. 4 is a conceptual view illustrating operation of the GC program in an append-only file system in the present embodiment.
FIG. 5 is a conceptual view illustrating operation of the GC program in an append-only file system in the present embodiment.

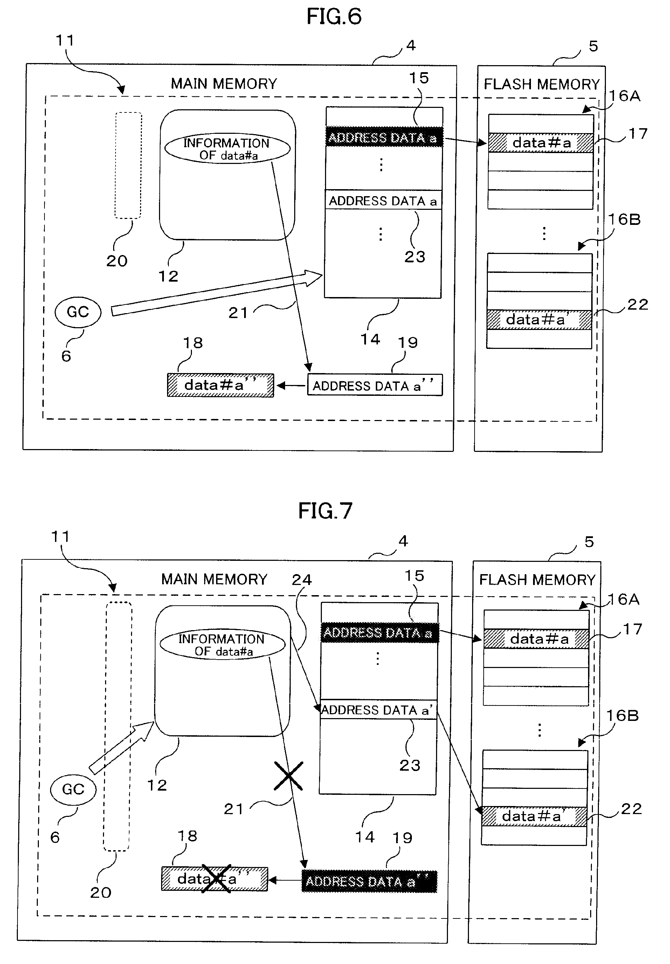

FIG. 6 is a conceptual view illustrating operation of the GC program in an append-only file system in the present embodiment.
FIG. 7 is a conceptual view illustrating operation of the GC program in an append-only file system in the present embodiment.

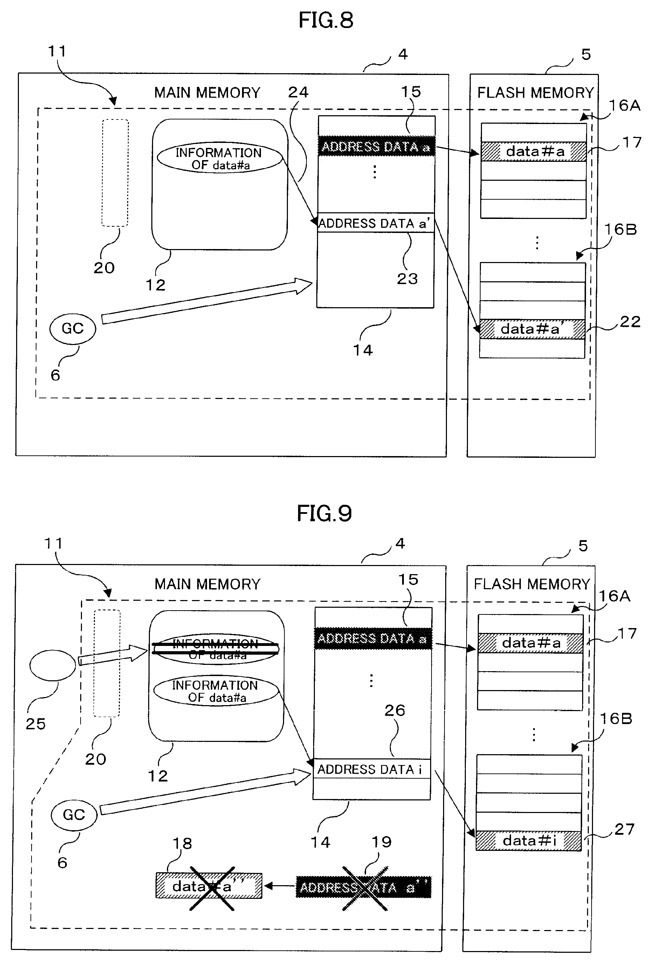

FIG. 8 is a conceptual view illustrating operation of the GC program in an append-only file system in the present embodiment.
FIG. 9 is a conceptual view illustrating a state obtained by the operation of the GC program performed in the case (NO in S103) where another program in the append-only file system rewrites the file to make necessary data into unnecessary data in the present embodiment.

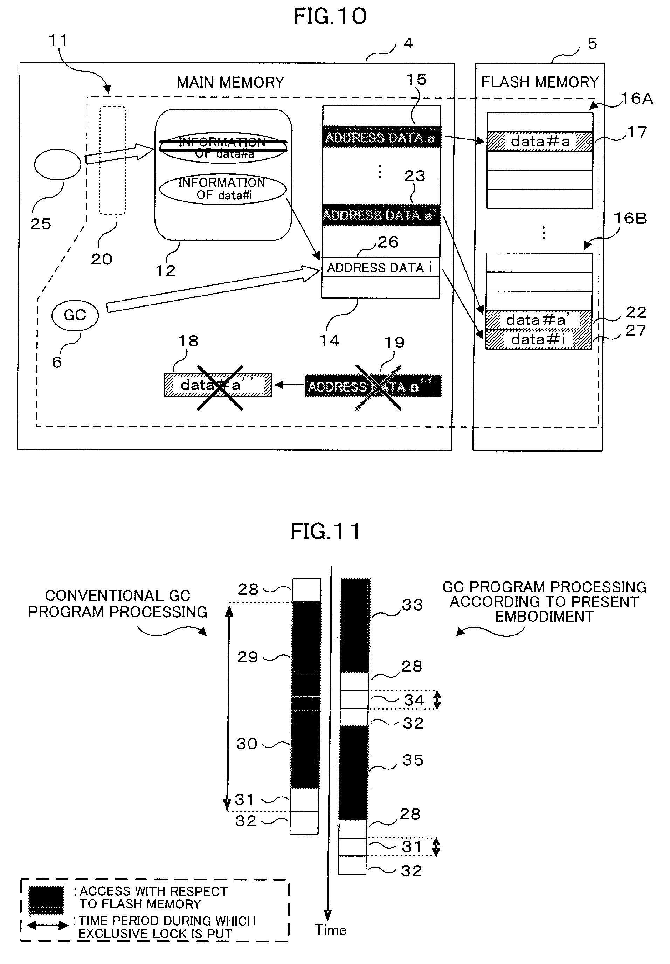

FIG. 10 is a conceptual view illustrating a state obtained by the operation of the GC program performed in the case (NO in S108) where another program in the append-only file system rewrites the file to make necessary data into unnecessary data in the present embodiment.
FIG. 11 is a comparison view between the GC program processing according to the present embodiment and GC program processing in the conventional art.
FIG. 12 is a block diagram illustrating an example of a configuration of a GC system according to the present invention.
FIG. 13 is a block diagram illustrating a conventional example of a configuration of a device having a built-in system using a flash memory.
FIG. 14 is a conceptual view of data readout processing in an append-only file system.
FIG. 15 is a conceptual view of data rewriting processing in the append-only file system.
FIG. 16 is a view illustrating the concept of operation of a GC program.
FIG. 17 is a view illustrating the concept of operation of a GC program.
FIG. 18 is a view illustrating the concept of operation of a GC program.
FIG. 19 is a view illustrating the concept of operation of a GC program.
FIG. 20 is a conceptual view of operation of the GC program in the append-only file system.

### Best Mode for Carrying Out the Invention

An embodiment of the present invention will be described below with reference to the accompanying drawings. As described above, it is assumed that the GC program be included in the file system and play some functions of the file system.

First, a configuration of the GC program according to the present embodiment will be described. FIG. 1 is a block diagram illustrating an example of a configuration of an apparatus provided with the GC program in the present embodiment. As illustrated in FIG. 1, an apparatus 1 includes, as a built-in system 2, a CPU 3 that controls operation of the apparatus 1, a main memory 4 (second storage device) serving as a main storage medium with which the CPU 3 exchange data, a flash memory 5 (first storage device) serving as an auxiliary storage medium for data storage, and an activation ROM 80 that stores a program for controlling the built-in system 2. In the present embodiment, the apparatus 1 is an apparatus, such as a built-in device (mobile phone, car navigation system, etc.) and a personal computer, that is equipped with or can be equipped with a flash memory.

In the present embodiment, a GC program 6 is stored in the activation ROM 80 together with other programs for controlling the built-in system 2 and is loaded into the main memory 4 after start-up of the apparatus 1. The GC program 6 includes a copy management program 7, an exclusive instruction program 8, an access management program 9, and a determination program 10.

The copy management program 7 is a program that creates a copy of data stored in the flash memory 5 and address data corresponding to the data on the main memory 4. The exclusive instruction program 8 instructs an exclusive mechanism loaded into the main memory 4 to put or release an exclusive lock so as to prohibit processes other than the GC program from accessing the flash memory or permit the same to access the flash memory 5. The access management program 9 creates or deletes an access path between a file to be expanded in the main memory 4 and an address table so as to switch the access path. The determination program 10 is a program that determines whether data in the main memory 4 and flash memory 5 is target data of the GC program or not. Details of the abovementioned exclusive mechanism, file, address table will be described later.

FIG. 2 is a conceptual view of an append-only file system according to the present embodiment. As illustrated in FIG. 2, a file system 11 controls/manages an access to data retained in the main memory 4 and flash memory 5. The main memory 4 retains a file 12 storing configuration data and an address table 14 storing address data indicating the location in the flash memory 5 at which data constituting the file is stored. The address table 14 is assumed to retain address data 15 (address data a) which is the address data corresponding to data#a 17 which is valid data or target data.

The file 12 retains, as constitution data, an access path 13 which is a reference path to the address table 14. The access path 13 is an access path corresponding to the data#a 17. The flash memory 5 composed of blocks 16A (first block), 16B (second block), ···, which are deletion units. Hereinafter, the blocks 16A, 16B, ···,are sometimes referred to collectively as "block 16". The number of blocks 16 (A, B, C, ···, N) differs depending on the storage capacity of the flash memory 5. In FIG. 2, it is assumed that the block 16A store data#a 17. Further, it is assumed that the file 12 be composed of the data#a 17.

Next, the outline of operation of data arrangement processing performed by the GC program according to the present embodiment will be described. In the present embodiment, the data arrangement processing refers to processing that migrates valid data stored in the flash memory 5 from one block to another so as to separate the valid data from invalid data. Here, the data#a 17 on the block A16 is subjected to the data arrangement processing. FIG. 3 is a flowchart illustrating an example of operation of the GC program according to the present embodiment. FIGS. 4 to 8 are conceptual views each illustrating operation of the GC program in the append-only file system in the present embodiment.

The GC program 6 uses the determination program 10 to determine whether data of the data#a 17 to be migrated is necessary data, that is, valid data that is not subjected to garbage collection (S101, first determination step). Hereinafter, the valid data that is not subjected to the garbage collection is referred to as "necessary data". The determination program 10 determines whether the target data is necessary data or not based on whether a status flag of the address data 15 retained in the address table 14 is marked or not. In the case where the status flag concerning the data#a 17 is not marked, it is determined that the target data is necessary data (YES in S101). Then, as illustrated in FIG. 4, the GC program 6 uses the copy management program 7 to read out the data#a 17 from the flash memory 5, create a copy of the data#a 17 as data#a" 18 on the main memory 4, and write address data 19 (address data a") in a predetermined area of the main memory 4 (S102, first copy step). After writing the address data 19, the determination program 10 determines whether there is any file that refers to the data#a 17 in the file system 11 (S103, second determination step). An exclusive mechanism 20 illustrated in FIG. 4 will be described later.

In the case where there is any file that refers to the data#a 17 in the file system 11 (YES in S103), the exclusive instruction program 8 instructs the exclusive mechanism 20 to put an exclusive lock on the file 12 as illustrated in FIG. 5 (S104, first exclusive instruction step). The exclusive mechanism 20 is a program having the function equivalent to the abovementioned exclusive mechanism 107. After putting the exclusive lock on the file 12, the GC program 6 uses the access management program 9 to remove the access path 13 to the data#a 17 and create an access path 21 to the address data 19 created on the main memory 4 (S105, first switch step). The data#a 17 on the flash memory 5 becomes unnecessary data at this time point, so that the GC program 6 marks the status flag in the address data 15, uses the exclusive instruction program 8 to instruct the exclusive mechanism 20 to release the exclusive lock on the file 12 (S106, first exclusive release instruction step, first flag setting step). The marking of the status flag in the address data 15 may be done after the release of the exclusive lock.

After releasing the exclusive lock on the file 12, the GC program 6 uses the copy management program 7 to copy the data#a" 18 to a new block 16B on the flash memory 5 as data#a' 22 and write address data 23 (address data a') which is the position information of the data#a' 22 in the address table 14 as illustrated in FIG. 6 (S107, second copy step). Although the data#a" 18 is copied to the block 16B in this example, the data#a" 18 may be copied to any block as long as the block has a free space. After the above writing, the determination program 10 determines whether the data#a" 18 is necessary data or not (S108, third determination step). That is, the determination program 10 determines whether the status flag is marked or not.

When it is determined that the data#a" 18 is necessary data, the GC program 6 uses the exclusive instruction program 8 to instruct the exclusive mechanism 20 to put an exclusive lock on the file 12 once again (S109, second exclusive instruction step) and uses the access management program 9 to remove the access path 21 to the address data 19 and create an access path 24 to the address data 23 (S110, second switch step) as illustrated in FIG. 7. After creating the access path 24, the GC program 6 uses the exclusive instruction program 8 to instruct the exclusive mechanism 20 to release the exclusive lock on the file 12 (S111, second exclusive release step) and deletes the data#a" 18 and address data 19 which are no longer necessary (S112, first deletion step) as illustrated in FIG. 8. This deletion can be executed without regard to the block as a deletion unit since the data#a" 18 and address data 19 exist not on the flash memory 5 but on the main memory 4. Further, the deletion of the data#a" 18 and address data 19 may be performed before the release (S111) of the exclusive lock on the file 12, that is, immediately after the creation of the access path 24. With the above procedure, migration of the necessary data is completed.

When it is determined, in step S101 of FIG. 3, that the data of the data#a 17 is unnecessary data (NO in S101), that is, when the status flag is marked in the address data 15, which means the data#a 17 is the deletion target data to be deleted in the garbage collection, so the data#a 17 need not be migrated. Thus, the GC program 6 ends the processing without migrating the data#a 17.

In the processing flow of FIG. 3, the exclusive lock is put on the file only when the address needs to be switched. Thus, it is possible to reduce the time period during which the exclusive is performed as compared to a conventional approach in which the exclusive is performed in the entire time period during which migration of data between blocks is executed.

The data arrangement processing has been described in the present embodiment. The GC program 6 repeats the data arrangement processing to migrate the necessary data on the flash memory 5 so as to delete data in the block 16 including only unnecessary data.

Since the exclusive is performed only when needed, there is a possibility that the data content of the file 12, that is, data on the flash memory 5 may be rewritten by another program during the processing of the GC program 6. When the GC program 6 continue its processing in a state where the data content has been rewritten, the number of unnecessary data before rewiring may be increased in the flash memory 5. The timing at which the rewriting is performed is between steps S102 and S103 and between steps S107 and S108 of FIG. 3 where the exclusive control is not performed. In the following, processing performed by the GC program when necessary data is rewritten between steps S102 and S103 and between steps S107 and S108 will be described.

First, the case of step S103 of FIG. 3 where there is no file that refers to the data of the data#a 17, that is, where the status flag is marked in the address data 15 corresponds to a state where another program alters the file 12 while the GC program 6 is reading out the data#a 17 to make the data#a 17 unnecessary.

FIG. 9 is a conceptual view illustrating a state obtained by the operation of the GC program performed in the case (NO in S103) where another program in the append-only file system rewrites the file to make necessary data into unnecessary data in the present embodiment. Another program 25 illustrated in FIG. 9 alters the data#a 17 into data#i 27, and address data 26 (address data i) is the position information of the data#i 27 in the flash memory 5. As illustrated in FIG. 9, the file system 11 rewrites the data#a 17 into data#i 27 according to an instruction from the another program 25, marks the status flag in the address data 15, and rewrites the access path to the address data 26 while the GC program 6 is copying data#a" 18. Thereafter, the GC program 6 ends copy of the data#a" 18 and uses the determination program 10 to confirm presence/absence of the status flag of the address data 15 on the main memory 4. Since the status flag is marked in the address data 15 (NO in S103), the GC program 6 deletes the data#a" 18 and address data 19 (S112, second deletion step) and ends this processing.

The case of step S108 of FIG. 3 where the data of the data#a" 18 is unnecessary data, that is, where the status flag is marked in the address data 19 corresponds to a state where another program alters the file 12 while the GC program 6 is writing the data#a' 22 to make the data#a" 18 unnecessary.

FIG. 10 is a conceptual view illustrating a state obtained by the operation of the GC program performed in the case (NO in S108) where another program in the append-only file system rewrites the file to make necessary data into unnecessary data in the present embodiment. As illustrated in FIG. 10, the file system 11 rewrites the data#a" 18 into data#i 27 according to an instruction from the another program 25, marks the status flag in the address data 19, and rewrites the access path to the address data 26 while the GC program 6 is copying data#a' 22. Thereafter, the GC program 6 ends copy of the data#a' 22 and uses the determination program 10 to confirm the status flag of the address data 19 on the main memory 4. Since the status flag is marked in the address data 19 (NO in S108), the GC program 6 marks the status flag in address data 23 (S113, second flag setting step) and deletes the data#a" 18 and address data 19 (S112, third deletion step) and ends this processing.

Comparison between an example of operation of the GC program according to the present embodiment and operation of the conventional art will be described below.

FIG. 11 is a comparison view between the GC program processing according to the present embodiment and conventional GC program processing. The left side of the drawing illustrates the conventional GC program processing, and the right side thereof illustrates the GC program according to the present embodiment. In FIG. 11, reference numeral 28 denotes the exclusive processing for the file 12, 29 denotes the readout processing for data#a 17, 30 denotes the processing of creating data#a' 22 which is a copy of the data#a 17, 31 denotes the processing of creating the access path of the data#a' 22, and 32 denotes the exclusive release processing. Further, reference numeral 33 denotes the processing of creating data#a" 18 which is a copy of the data#a 17 (S102), 34 denotes the processing of creating the access path of the data#a" 18 (S105), and 35 denotes the processing of creating data#a' 22 which is a copy of the data#a" 18 (S107). Hatched portions in FIG. 11 each denote an access of the GC program 6 to the flash memory 5, and sections each indicated by an arrow denotes the time period during which the exclusive lock is put on the file 12.

As illustrated in FIG. 11, in the case of the conventional art, the time period during which the exclusive lock is put on the file 12 includes time-consuming access operation such as data readout/write operation from/into the flash memory 5, while in the case of the GC program processing according to the present embodiment, the time period during which the exclusive lock is put on the file 12 does not include the access operation with respect to the flash memory, thereby reducing the exclusive time set by the GC program 6.

A configuration of a GC system according to the present embodiment will be described in detail below.

FIG. 12 is a block diagram illustrating an example of a configuration of a GC system according to the present embodiment. As illustrated in FIG. 12, a GC system 36 includes, in the activation ROM 80, a GC processing section 37 (first flag setting section, second flag setting section, deletion section) in place of the GC program 6. The GC processing section 37 includes a copy management section 38 (first copy section, second copy section), an exclusive instruction section 39 (first exclusive instruction section, first exclusive release instruction section, second exclusive instruction section, second exclusive release instruction section), an address management section 40 (first switch section, second switch section), and a determination section 41 (first determination section, second determination section). Cooperation between the GC program 6 and hardware resources such as the CPU 3, main memory 4, flash memory 5, and activation ROM 80 realizes the GC processing section 37 of FIG. 12. Cooperation between the copy management program 7 and the abovementioned hardware resources realizes the copy management section 38, cooperation between the exclusive instruction program 8 and abovementioned hardware resources realizes the exclusive instruction section 39. Further, cooperation of the address management program and the abovementioned hardware resources realizes the address management section 40 of FIG. 12, and cooperation between the determination program 10 and the abovementioned hardware resources realizes the determination section 41.

With the configuration described above, it is possible to provide a system that performs a series of the data arrangement processing of the GC program 6.

According to the present embodiment, the copy management program 7 and access management program 9 create a backup of the data#a 17 which is necessary data on the main memory 4 to allow another program to access the file 12 even during execution of the GC program 6. Further, the exclusive instruction program 8 performs exclusive at the time of switching of the access path to exclude time-consuming access operation with respect to the flash memory 5 from the time period during which the exclusive lock is put on the file 12, thereby minimizing the exclusive time set for the file 12. Further, the backup of the target data is performed on a per data item basis, so that even a system having a small-capacity main memory 4 can execute the GC program.

The present invention can be embodied in various forms, without departing from the spirit or the main feature. Therefore, the aforementioned embodiment is merely illustrative of the invention in every aspect, and not limitative of the same. The scope of the present invention is defined by the appended claims, and is not restricted by the description herein set forth. Further, various changes and modifications to be made within the scope of the appended claims and equivalents thereof are to fall within the scope of the present invention.

Further, by storing the above program in a computer-readable storage medium, it is possible to allow a computer constituting the GC system to execute the program. The above program is stored in a computer-readable storage medium so that the computer that makes up the information collection device may execute the program. The above computer-readable storage media include: an internal storage device installed in a computer, such as a ROM or RAM; a portable storage medium, such as a CD-ROM, flexible disk, DVD disk, magnetic optical disk or IC card; a data base that stores computer programs; another computer and a database thereof; and a transmission medium on a line.

### Industrial Applicability

According to the present invention, it is possible to provide a garbage collection system, a garbage collection program, a garbage collection method, and a garbage collection system capable of reducing exclusive time required for data migration.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present inventions has been described in detail, it should be understood that the various changes, substitutions, and alterations could be made hereto without departing from the spirit and scope of the invention.

## Claims

1. A garbage collection program allowing a computer to execute:
a first copy step that copies valid data from a first block in a first storage device to a second storage device different from the first storage device, a unit of deletion of data stored in the first storage device being a block, the valid data and invalid data being stored in the first block;
a first exclusive instruction step that instructs an exclusive mechanism to perform exclusive control of accessing to the valid data in a copy-source of the first copy step;
a first switch step that switches, after the exclusive control instructed by the first exclusive instruction step, an access path to the valid data in the copy-source of the first copy step, to the valid data in a copy-destination of the first copy step;
a first exclusive release instruction step that instructs, after the first switch step switches the access path, the exclusive mechanism to release the exclusive control;
a second copy step that copies the valid data in the copy-destination of the first copy step from the second storage device to a second block in the first storage device to collect, the second block being different from the first block;
a second exclusive instruction step that instructs the exclusive mechanism to perform exclusive control of accessing to the valid data in a copy-source of the second copy step;
a second switch step that switches, after the exclusive control instructed by the second exclusive instruction step, an access path to the valid data in the copy-source of the second copy step, to the valid data in a copy-destination of the second copy step; and
a second exclusive release instruction step that instructs, after the second switch step switches the access path, the exclusive mechanism to release the exclusive control.

2. The garbage collection program according to claim 1, further allowing the computer to execute, a first flag setting step that sets, after the first switch step switches the access path to the valid data in the copy-source of the first copy step, to the valid data in the copy-destination of the first copy step, a predetermined flag regard the valid data in the copy-source of the first copy step as the invalid data.

3. The garbage collection program according to claim 1, further allowing the computer to execute, a first deletion step that deletes, after the exclusive mechanism releases the exclusive control by the second exclusive release instruction step, the valid data in the copy-destination of the first copy step.

4. The garbage collection program according to claim 1, further allowing the computer to execute, a first determination step that determines, before the first copy step copies the valid data in the copy-source of the first copy step from the first block to the second storage device, whether a target data is the valid data or the invalid data.

5. The garbage collection program according to claim 4, allowing the computer to execute, the first copy step when it is determined by the first determination step that the target data is the valid data.

6. The garbage collection program according to claim 4, **characterized in that**
when it is determined by the first determination step that the target data is the invalid data, processing of the garbage collection program is ended.

7. The garbage collection program according to claim 1, further allowing the computer to execute, a second determination step that determines, after the first copy step copies the valid data in the copy-source of the first copy step from the first block to the second storage device, whether the valid data in the copy-source of the first copy step in the first block is still the valid data or has become the invalid data.

8. The garbage collection program according to claim 7, allowing the computer to execute, the first exclusive instruction step when it is determined by the second determination step that the valid data in the copy-source of the first copy step is still the valid data.

9. The garbage collection program according to claim 7, **characterized by** allowing the computer to execute, a second deletion step that deletes the valid data in the copy-destination of the first copy step to end processing of the garbage collection program when it is determined by the second determination step that the valid data in the copy-source of the first copy step has become the invalid data.

10. The garbage collection program according to claim 1, further allowing the computer to execute, a third determination step that determines, after the second copy step copies the valid data in the copy-source of the second copy step in the second storage device to the second block, whether the valid data in the copy-source of the second copy step in the second storage device is still the valid data or has become the invalid data.

11. The garbage collection program according to claim 10, allowing the computer to execute, the second exclusive instruction step when it is determined by the third determination step that the valid data in the copy-source of the second copy step in the second storage device is still the valid data.

12. The garbage collection program according to claim 10, **characterized by** further allowing the computer to execute:
a second flag setting step that marks, when it is determined by the third determination step that the valid data in the copy-source of the second copy step in the second storage device has become the invalid data, a predetermined flag regard the valid data copied to the second block as the invalid data; and
a third deletion step that deletes the valid data copied by the first copy step, to end processing of the garbage collection program.

13. A garbage collection system **characterized by** comprising:
a first copy section that copies valid data from a first block in a first storage device to a second storage device different from the first storage device, a unit of deletion of data stored in the first storage device being a block, the valid data and invalid data being stored in the first block;
a first exclusive instruction section that instructs an exclusive mechanism to perform exclusive control of accessing to the valid data in a copy-source of the first copy section;
a first switch section that switches, after the exclusive control instructed by the first exclusive instruction section, an access path to the valid data in the copy-source of the first copy section, to the valid data in a copy-destination of the first copy section;
a first exclusive release instruction section that instructs, after the first switch section switches the access path, the exclusive mechanism to release the exclusive control;
a second copy section that copies the valid data in the copy-destination of the first copy section from the second storage device to a second block in the first storage device to collect, the second block being different from the first block;
a second exclusive instruction section that instructs the exclusive mechanism to perform exclusive control of accessing to the valid data in a copy-source of the second copy section;
a second switch section that switches, after the exclusive control instructed by the second exclusive instruction section, an access path to the valid data in the copy-source of the second copy section, to the valid data in a copy-destination of the second copy section; and
a second exclusive release instruction section that instructs, after the second switch section switches the access path, the exclusive mechanism to release the exclusive control.

14. The garbage collection system according to claim 13, **characterized by** further comprising, a first flag setting section that sets, after the first switch section switches the access path to the valid data in the copy-source of the first copy section, to the valid data in the copy-destination of the first copy section, a predetermined flag regard the valid data in the copy-source of the first copy section as the invalid data.

15. The garbage collection system according to claim 13, **characterized by** further comprising, a deletion section that deletes, after the exclusive mechanism releases the exclusive control by the second exclusive release instruction section, the valid data in the copy-destination of the first copy section.

16. The garbage collection system according to claim 13, **characterized by** further comprising, a first determination section that determines, before the first copy section copies the valid data in the copy-source of the first copy section from the first block to the second storage device, whether a target data is the valid data or the invalid data.

17. The garbage collection system according to claim 13, **characterized by** further comprising, a second determination section that determines, after the first copy section copies the valid data in the copy-source of the first copy section from the first block to the second storage device, whether the valid data in the copy-source of the first copy section in the first block is still the valid data or has become the invalid data.

18. The garbage collection system according to claim 13, **characterized by** further comprising, a third determination section that determines, after the second copy section copies the valid data in the copy-source of the second copy section in the second storage device to the second block, whether the valid data in the copy-source of the second copy section in the second storage device is still the valid data or has become the invalid data.

19. A garbage collection method comprising:
a first copy step that copies valid data from a first block in a first storage device to a second storage device different from the first storage device, a unit of deletion of data stored in the first storage device being a block, the valid data and invalid data being stored in the first block;
a first exclusive instruction step that instructs an exclusive mechanism to perform exclusive control of accessing to the valid data in a copy-source of the first copy step;
a first switch step that switches, after the exclusive control instructed by the first exclusive instruction step, an access path to the valid data in the copy-source of the first copy step, to the valid data in a copy-destination of the first copy step;
a first exclusive release instruction step that instructs, after the first switch step switches the access path, the exclusive mechanism to release the exclusive control;
a second copy step that copies the valid data in the copy-destination of the first copy step from the second storage device to a second block in the first storage device to collect, the second block being different from the first block;
a second exclusive instruction step that instructs the exclusive mechanism to perform exclusive control of accessing to the valid data in a copy-source of the second copy step;
a second switch step that switches, after the exclusive control instructed by the second exclusive instruction step, an access path to the valid data in the copy-source of the second copy step, to the valid data in a copy-destination of the second copy step; and
a second exclusive release instruction step that instructs, after the second switch step switches the access path, the exclusive mechanism to release the exclusive control.

20. The garbage collection method according to claim 19, further comprising, a first flag setting step that sets, after the first switch step switches the access path to the valid data in the copy-source of the first copy step, to the valid data in the copy-destination of the first copy step, a predetermined flag regard the valid data in the copy-source of the first copy step as the invalid data.
